# EUROPÄISCHE PATENTSCHRIFT

(11) **EP 0 470 354 B1**
(45) Veröffentlichungstag und Bekanntmachung des Hinweises auf die Patenterteilung: **27.04.1994**
(21) Anmeldenummer: 91110538.5
(22) Anmeldetag: 26.06.1991
(51) Int. Cl.: B23B 51/02, E04B 10/44

(54) **Bohrer zur Herstellung von zylindrischen Bohrlöchern**
Drill to make cylindrical holes
Foret à fabriquer des trous cylindriques

(30) Priorität: 06.08.1990 DE 4024889; 06.09.1990 DE 4028261
(43) Veröffentlichungstag der Anmeldung: 12.02.1992
(73) Patentinhaber: fischerwerke Artur Fischer GmbH & Co. KG, D-72178 Waldachtal (DE)
(72) Erfinder: Fischer, Arthur, Prof.Dr. h.c., W-7244 Waldachtal 3/Tumlingen (DE)

(56) Entgegenhaltungen:
- EP-A- 0 320 881
- DE-A- 3 527 933
- GB-A- 2 180 575
- GB-A- 2 212 091
- US-A- 3 645 642
- US-A- 4 285 620
- US-A- 4 789 276

## Beschreibung

Die Erfindung betritt einen Bohrer zur Herstellung zylindrischer Bohrlöcher in harten Baustoffen, insbesondere in Beton, gemäß der Gattung des Anspruches 1.

Es sind Bohrer bekannt, die einen aus einer Bohrplatte gebildeten Bohrkopf und einen sich daran anschließenden geraden Bohrschaft besitzen und am Bohrschaftende in die Aufnahme einer Bohrmaschine oder dergleichen einspannbar sind. Soll mit einem derartigen Bohrer in Beton ein Bohrloch eingebracht werden, so tritt insbesondere bei Bohrlöchern mit größerer Tiefe ein Verkanten des Bohrers und ein Klemmen beim Bohrvorgang auf. Die im Beton enthaltenen Zuschlagstoffe machen das Betonmauerwerk inhomogen, weshalb die Bohrspitze bei Auftreffen auf besonders harte Zuschlagstoffe zur Seite ausweicht und den Bohrer aus der Bohrlochachse zwingt. Dies führt zum Klemmen und damit zu einer erheblichen Belastung des Bohrers, wobei die von Hand betätigte Bohrmaschine ruckartige Bewegungen ausführt, die insbesondere die Gelenke des Menschen belasten.

Aus der GB-A-2 212 091 ist eine Bohrvorrichtung zur Herstellung langer Bohrlöcher in Gestein für einen Einsatz im Tunnelbau bekannt. Die Bohrvorrichtung besteht aus mehreren Verlängerungsstücken, die zur Bildung des Schaftteiles über eine Schaftstange nacheinander angeordnet sind. Die als zylinderförmige Schaftverbreiterungen ausgebildeten Verlängerungsstücke dienen als Abstützungen für die Schaftstange, um bei der Erstellung der langen Bohrlöcher eine grobe Geradeausführung zu erreichen. Aufgrund der dünnen Schaftstange und der besonderen Ausgestaltung des Bohrkopfes ist mit der bekannten Bohrvorrichtung die Herstellung eines exakten Bohrloches für den Einsatz von Spreizankern weder möglich noch bezweckt.

Der Erfindung liegt die Aufgabe zugrunde, einen Bohrer zur Herstellung zylindrischer Bohrlöcher in harten Baustoffen wie Beton zu schaffen, der eine gute Geradeausführung besitzt und die Gefahr des Klemmens beim Bohrvorgang weitgehendst vermeidet.

Die Lösung dieser Aufgabe wird bei einem Bohrer der eingangs genannten Gattung durch die im kennzeichnenden Teil des Hauptanspruches angegebenen Merkmale erhalten. Durch am Bohrschaft in Abständen angeordnete ballige Schaftverbreiterungen, deren maximaler Durchmesser in etwa dem Bohrkopfdurchmesser entspricht, wird eine sehr genaue Geradeausführung des Bohrers beim Bohrvorgang erreicht. Zunächst dringt der Bohrkopf in das Mauerwerk ein, bis die erste ballige Schaftverbreitung an der Bohrlochöffnung in das Bohrloch eindringt und eine Geradeausführung des Bohrers übernimmt. Dringt der Bohrer soweit ein, daß auch die zweite ballige Schaftverbreiterung in das Bohrloch gelangt, so wird dadurch die Geradeausführung des Bohrschaftes weiter begünstigt und die Gefahr eines Verkantens und Verklemmens des Bohrers im Bohrloch praktisch vollständig vermieden.

Der Steigungswinkel der Bohrmehlnuten beträgt vorzugsweise mehr als 45° gegenüber der Längsachse des Bohrers, so daß bei ausreichender Tiefe der Bohrmehlnuten das anfallende Bohrmehl schnell aus dem Bohrloch befördert wird.

Besonders vorteilhaft ist es, die zwischen den Bohrmehlnuten verbleibenden Stege breiter auszubilden als die Bohrmehlnuten, da die relativ breiten Stege gute Anlageflächen an den balligen Schaftverbreiterungen darstellen. Diese relativ breiten Anlageflächen können sich bei auftretenden Seitenkräften gut an der Bohrlochwand abstützen, ohne dabei festzuklemmen. Die bevorzugte Ausführungsform sieht vor, daß der zwischen den Bohrmehlnuten verbleibende Steg um mehr als das 1,5fache breiter ist als die Bohrmehlnuten. Gerade in Beton wird dadurch eine optimale Führung für den Bohrer erhalten.

Zwischen zwei balligen Schaftverbreiterungen, die unmittelbar aneinandergrenzen, kann eine Ringnut am Schaft umlaufen. Außerdem ist es vorteilhaft, wenn die Übergänge von den Bohrmehlnuten zu dem zwischen diesen verbleibenden Steg als Schneidkanten ausgebildet sind, da diese Schneidkanten ein Glätten der Bohrlochwand bewirken.

Die Krümmung der balligen Verbreiterungen hat einen verhältnismäßig großen Krümmungsradius, so daß von einer Krümmung entsprechend einer Bogensehne gesprochen werden kann. Diese flache Krümmung behindert das Eindringen des Bohrers beim Bohrvorgang nicht, sondern reduziert die Reibung des Schaftes im Bohrloch, der nur in den Scheitelbereichen der balligen Verbreiterungen an der Bohrlochwand anliegt. Mit zunehmender Bohrlochtiefe wird die Geradeausführung des Bohrers bei Eindringen weiterer Schaftverbreiterungen in das Bohrloch verstärkt.

Eine sehr günstige Bohrmehlabfuhr wird erreicht, wenn der Bohrschaft mit zwei wendelförmig umlaufenden Bohrmehlnuten versehen ist, die jeweils entlang einer Seitenkante der Bohrplatte auslaufen. Damit steht für das auf jeder Seite der Bohrplatte anfallende Bohrmehl jeweils eine von der anderen getrennte Bohrmehlnut zur Verfügung. Bei den bekannten Hammerbohrern ist der Bohrschaft nur mit einer Bohrmehlnut versehen, die im Bereich des Bohrkopfes entlang einer Seitenkante der Bohrplatte ausläuft. Der an der anderen Seite der Bohrplatte angeordnete Nutauslauf mündet unmittelbar hinter dem Bohrkopf ebenfalls in diese Bohrmehlnut, so daß an dieser Mündungsstelle keine die Bohrmehlabfuhr störende Stauungen eintreten können. Ferner ergibt sich durch den unsymmetrischen Auslauf der Bohrmehlnut im Bereich des Bohrkopfes unterschiedlich große und gegenüber den Seitenkanten der Bohrplatte versetzte Führungsflächen des Bohrschaftes, die ein Verlaufen des Bohrers bewirken können. Diese Nachteile sind bei der Anordnung zweier wendelförmig umlaufender Bohrmehlnuten und damit einem symmetrischen Nutauslauf vermieden.

Besonders vorteilhaft ist es, wenn die Bohrmehlnuten ein halbkreisförmiges Profil aufweisen. Damit entsteht ein etwa rechtwinkliger Übergang zwischen der Bohrmehlnut und der Mantelfläche des Bohrschaftes, der eine scharfe, das Bohrloch ausreibende Kante bildet. Des weiteren wird durch diese Gestaltung das Eindringen von Bohrmehl zwischen die Stegfläche des Bohrschaftes und der Bohrlochwandung erschwert. Eindringendes Bohrmehl kann nämlich zur Verklemmung des Bohrers im Bohrloch und damit zu einer den Bohrer schädigenden Wärementwicklung führen.

Die Erfindung wird nachfolgend anhand der Zeichnung nähers erläutert.

Es zeigen:
- Figur 1: ein Ausführungsbeispiel des Bohrers,
- Figur 2: den Bohrer mit zwei wendelförmig umlaufenden Bohrmehlnuten,
- Figur 3: einen Querschnitt des Bohrschaftes entsprechend der Schnittlinie A-A.

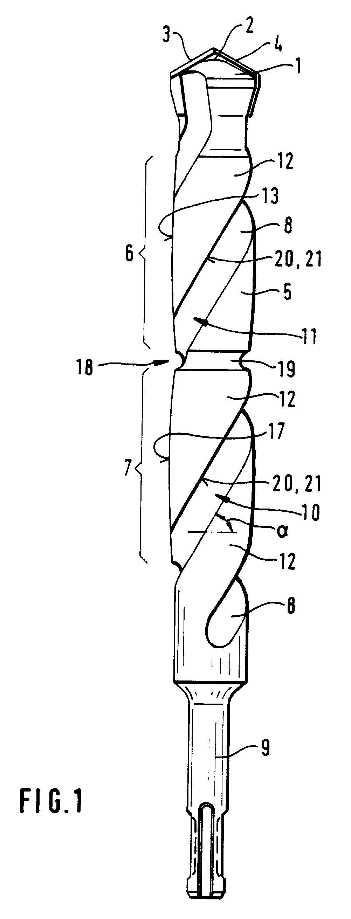

Figur 1 zeigt einen Bohrer mit einem Bohrkopf 1, an dem eine Bohrplatte 2 mit ihren Schneiden 3, 4 übersteht. Am Bohrschaft 5 sind zwei hintereinander angeordnete ballige Bohrschaftverbreiterungen 6, 7 ausgebildet, durch die eine Bohrmehlnut 8 bis zum Bohrkopf 1 verläuft. An dem Bohrkopf 1 abgewandten Schaftende 9 läßt sich der Bohrer in eine hier nicht dargestellte Bohreraufnahme einer Bohrvorrichtung einspannen. Jede der beiden balligen Bohrschaftverbreiterungen 6, 7 besitzt eine gleichmäßige Wölbung mit größerem Wölbungsradius, so daß auch von einer flach ansteigenden Wölbung gesprochen werden kann.

Zwischen benachbarten Wendeln 10, 11 der Bohrmehlnut 8 verbleibt ein Steg 12, der eine wesentlich größere Breite hat als die Bohrmehlnut 10. Der verhältnismäßig breite Steg 12 bildet gerade im Bereich der Schaftverbreiterungen 6, 7 an deren Scheitelbereich Anlageflächen 13, 17, die als Führungsflächen beim Eindringen des Bohrers in ein Mauerwerk dienen.

An der zwischen den beiden Schaftverbreiterungen 6, 7 ausgebildeten Schaftverjüngung 18 läuft eine Ringnut 19 am Schaft 5 um.

Das Ausführungsbeispiel zeigt zwei Schaftverbreiterungen 6, 7, jedoch sind bei entsprechender Bohrschaftlänge auch mehr als zwei Schaftverbreiterungen möglich, um auf der gesamten Bohrschaftlänge eine gute Führung bei der Herstellung von Bohrlöchern mit großer Bohrlochtiefe zu erzielen. Dabei kann eine Bohrmehlnut 8 oder zwei gegenüberliegende Bohrmehlnuten wendelförmig am Schaft ausgebildet sein, wobei die Übergänge 20 von den Bohrmehlnuten zu dem Steg 12 als wendelförmige Schneidkanten 21 ausgebildet sind. Diese Schneidkanten 21 glätten die Bohrlochwand beim Bohrvorgang und tragen somit ebenfalls dazu bei, daß der Bohrer im Bohrloch nicht festklemmt.

Bei der dargestellten Ausführungsform besitzt die Bohrmehlnut 8 einen Steigungswinkel von etwa 60°.

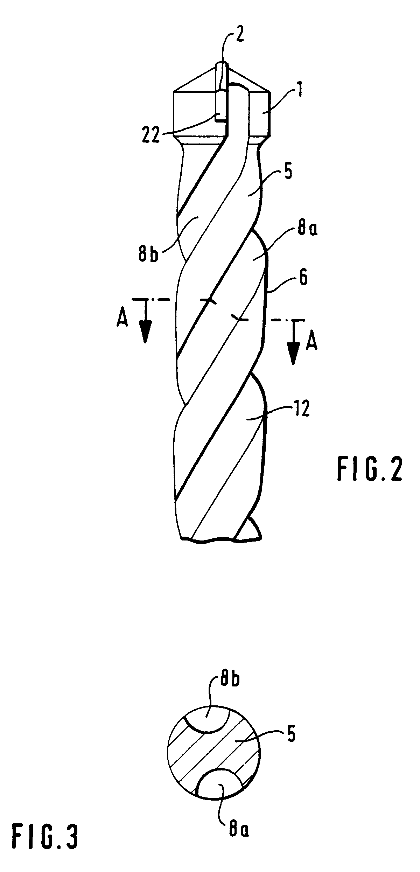

Der Bohrschaft 5 des Bohrers nach Figur 2 ist mit zwei wendelförmig umlaufenden Bohrmehlnuten 8a, 8b versehen. Diese um 180° zueinander versetzt angeordneten Bohrmehlnuten 8a, 8b laufen im Bereich des Bohrkopfes 1 achsparallel jeweils entlang einer Seitenkante 22 der Bohrplatte 2 aus. Das auf jeder Seite der Bohrplatte 2 anfallende Bohrmehl wird somit in der dieser Seite zugeordneten Bohrmehlnut in Richtung Schaftende 9 gefördert.

Eine besonders günstige Bohrmehlförderung ergibt sich durch die in Figur 3 erkennbare halbkreisförmige Profilierung der Bohrmehlnuten 8a, 8b.

## Patentansprüche

1. Bohrer zur Herstellung zylindrischer Bohrlöcher in harten Baustoffen, insbesondere in Beton, der einen aus einer Bohrplatte gebildeten Bohrkopf und einen aus einem Stück bestehenden Schaft mit wenigstens einer wendelförmig umlaufenden Bohrmehlnut hat, dessen dem Bohrkopf abgewandtes Schaftende in eine Bohreraufnahme einer Bohrmaschine oder dgl. einspannbar ist, **dadurch ge-** **kennzeichnet,** daß am Bohrschaft (5) wenigstens zwei hintereinander angeordnete, ballige Schaftverbreiterungen (6, 7) mit jeweils gleich großem maximalem Durchmesser ausgebildet sind, und daß der Bohrkopf (1) mindestens so groß ist wie der maximale Durchmesser der Schaftverbreiterungen (6, 7).

2. Bohrer nach Anspruch 1, **dadurch gekennzeichnet,** daß der Steigungswinkel (a) der Bohrmehlnuten (8) mehr als 45° beträgt.

3. Bohrer nach einem der Ansprüche 1 oder 2, **dadurch gekennzeichnet,** daß die Breite der Bohrmehlnuten (10, 11) kleiner ist als die Breite des zwischen den Bohrmehlnuten verbleibenden Steges (12).

4. Bohrer nach einem der vorhergehenden Ansprüche, **dadurch gekennzeichnet,** daß der zwischen den Bohrmehlnuten (10, 11) verbleibende Steg (12) um mehr als das 1,5fache breiter ist als die Bohrmehlnuten.

5. Bohrer nach einem der vorhergehenden Ansprüche **dadurch gekennzeichnet,** daß an der zwischen zwei Schaftverbreiterungen (6, 7) ausgebildeten Schaftverjüngung (18) eine Ringnut (19) am Schaft (5) umläuft.

6. Bohrer nach einem der vorhergehenden Ansprüche, **dadurch gekennzeichnet,** daß die Übergänge (20) von den Bohrmehlnuten (11, 12) zu dem zwischen diesen verbleibenden Steg (12) Schneidkanten (21) bilden.

7. Bohrer nach einem der vorhergehenden Ansprüche, **dadurch gekennzeichnet,** daß der Bohrschaft (5) mit zwei wendelförmig umlaufenden Bohrmehlnuten (8a, 8b) versehen ist.

8. Bohrer nach Anspruch 7, **dadurch gekennzeichnet,** daß die beiden Bohrmehlnuten (8a, 8b) im Bereich des Bohrkopfes (1) achsparallel jeweils entlang einer Seitenkante (22) der Bohrplatte (2) auslaufen.

9. Bohrer nach einem der vorhergehenden Ansprüche, **dadurch gekennzeichnet,** daß die Bohrmehlnuten (8, 8a, 8b) ein halbkreisförmiges Profil aufweisen.

## Claims

1. Drill bit for producing cylindrical drilled holes in hard building materials, in particular in concrete, which has a drilling head formed from a drilling plate and a one-piece shank with at least one helically extending drilling dust groove, the shank end of which drill bit remote from the drilling head is arranged to be clamped in a drill bit chuck of a drilling machine or similar apparatus, characterized in that on the drill shank (5) there are formed at least two bulb-like shank enlargements (6, 7) arranged one behind the other, each having the same maximum diameter, and the drilling head (1) is at least the same size as the maximum diameter of the shank enlargements (6, 7).

2. A drill bit according to claim 1, characterized in that the angle (α) at which the drilling dust grooves (8) run is more than 45°.

3. A drill bit according to one of claims 1 or 2, characterized in that the width of the drilling dust grooves (10, 11) is smaller than the width of the land (12) remaining between the drilling dust grooves.

4. A drill bit according to one of the preceding claims, characterized in that the land (12) remaining between the drilling dust grooves (10, 11) is more than 1.5 times wider than the drilling dust grooves.

5. A drill bit according to one of the preceding claims, characterized in that an annular groove (19) encircles the shank (5) at the shank constriction (18) formed between two shank enlargements (6, 7).

6. A drill bit according to one of the preceding claims, characterized in that the transitions (20) from the drilling dust grooves (11, 12) to the land (12) remaining between these grooves form cutting edges (21).

7. A drill bit according to one of the preceding claims, characterized in that the drill shank (5) is provided with two helically extending drilling dust grooves (8a, 8b).

8. A drill bit according to claim 7, characterized in that in the region of the drilling head (1) each of the two drilling dust grooves (8a, 8b) runs out parallel to the axis along a side edge (22) of the drilling plate (2).

9. A drill bit according to one of the preceding claims, characterized in that the drilling dust grooves (8, 8a, 8b) have a semi-circular profile.

## Revendications

1. Foret pour exécution de trous cylindriques dans des matériaux durs, notamment du béton, comportant une tête composée d'un porte-lames et une queue monobloc, laquelle présente au moins une rainure hélicoïdale d'évacuation des poussières de forage et peut être serrée à son extrémité opposée dans le mandrin d'un dispositif de forage ou dispositif analogue, foret caractérisé en ce qu'au moins deux renflements convexes (6, 7), ayant un même diamètre maximum, sont formés l'un derrière l'autre sur la queue (5) et en ce que la tête (1) est au moins aussi large que le diamètre maximum de ces renflements (6, 7).

2. Foret selon la revendication 1, caractérisé en ce que l'angle d'inclinaison (α) des rainures (8) est supérieur à 45°.

3. Foret selon la revendication 1 ou 2, caractérisé en ce que la largeur des rainures (10, 11) est inférieure à la largeur du cordon (12) qui subsiste entre ces rainures.

4. Foret selon l'une des revendications précédentes, caractérisé en ce que le cordon (12) qui subsiste entre les rainures (10, 11) est plus de 1,5 fois plus large que ces rainures.

5. Foret selon l'une des revendications précédentes, caractérisé en ce qu'une gorge annulaire (19) entoure la queue (5) au rétrécissement (18) qui sépare les deux renflements convexes (6, 7).

6. Foret selon l'une des revendications précédentes, caractérisé en ce que les jonctions (20) entre les rainures (10, 11) et les cordons (12) qui subsistent entre elles forment des arêtes vives (21).

7. Foret selon l'une des revendications précédentes, caractérisé en ce que la queue (5) comporte deux rainures hélicoïdales (8a, 8b) d'évacuation des poussières de forage.

8. Foret selon la revendication 7, caractérisé en ce que les deux rainures (8a, 8b) se terminent à hauteur de la tête (1) parallèlement à l'axe de cette queue et le long d'un flanc latéral (22) respectif de la lame (2).

9. Foret selon l'une des revendications précédentes, caractérisé en ce que les rainures (8, 8a, 8b) d'évacuation des poussières de forage ont un profil de section droite semi-circulaire.
